# EUROPÄISCHE PATENTSCHRIFT

(11) **EP 1 403 150 B1**
(45) Veröffentlichungstag und Bekanntmachung des Hinweises auf die Patenterteilung: **26.09.2007**
(21) Anmeldenummer: 03090320.7
(22) Anmeldetag: 29.09.2003
(51) Int. Cl.: B60R 21/20, B60R 21/16

(54) **Insassenschutzeinrichtung**
Passenger protection device
Dispositif de protection du passager

(30) Priorität: 30.09.2002 DE 10246545
(43) Veröffentlichungstag der Anmeldung: 31.03.2004
(73) Patentinhaber: TAKATA - PETRI AG, 63743 Aschaffenburg (DE); Bayerische Motorenwerke Aktiengesellschaft, 80809 München (DE)
(72) Erfinder: Bendig, Udo, 85139 Wettstetten (DE); Boin, Manuela, 89160 Ulm (DE); Rasch, Georg, 89346 Bibertal-Bühl (DE); Einsiedel, Heinrich, 89077 Ulm (DE); Schluppkotten, Julius, 81547 München (DE)
(74) Vertreter: Fischer, Uwe

(56) Entgegenhaltungen:
- DE-A1- 10 056 298
- DE-A1- 19 632 222
- US-A- 2 834 606
- US-A1- 2001 052 693
- US-A1- 2002 024 203

## Beschreibung

Die Erfindung bezieht sich auf eine Insassenschutzeinrichtung mit einem aufblasbaren Gassack zum Schutz eines im Fonds eines Fahrzeugs befindlichen Fahrzeuginsassen mit den Merkmalen gemäß dem Oberbegriff des Anspruchs 1.

Eine derartige Insassenschutzeinrichtung ist in der deutschen Offenlegungsschrift DE 100 56 298 A1 beschrieben. Bei dieser Insassenschutzeinrichtung deckt ein zwischen Dachhimmel und Fahrzeugdach montierter Airbag nach einem Auslösen und Entfalten die Seiten, die Säulen und das Fahrzeugdach einteilig ab.

In der Gebrauchsmusterschrift G 92 02 725.3 ist eine Insassenschutzeinrichtung beschrieben, bei der ein Gassack in einer Rückenlehne oder in einer Kopfstütze eines Fahrzeugsitzes integriert ist. Im Falle eines Unfalls wird der Gassack aufgeblasen und entfaltet sich. Der Gassack gemäß der vorbekannten Insassenschutzeinrichtung weist drei Gassackabschnitte auf: Ein erster Gassackabschnitt schiebt sich beim Aufblasen zwischen den Kopf des Fahrzeuginsassen und die Seitentür des Fahrzeugs; dieser erste Gassackabschnitt wird in der Gebrauchsmusterschrift als "äußeres Seitenkissen" bezeichnet. Etwa rechtwinklig zu diesem äußeren Seitenkissen ist ein "Schädelkissen" als zweiter Gassackabschnitt vorgesehen, der sich über den Kopf des Fahrzeuginsassen legt. An das Schädelkissen ist ein keilförmiger Fortsatz als dritter Gassackabschnitt angeformt, der sich beim Aufblähen des Gassacks hinter den Hals des Fahrers schiebt. Zusammengefasst weist die vorbekannte Insassenschutzeinrichtung also einen im Sitz oder in der Kopfstütze des Sitzes integrierten Gassack auf, der nach dem Aufblasen einem Rundherum"-Schutz bieten soll.

Eine andere Insassenschutzeinrichtung ist in der deutschen Gebrauchsmusterschrift 297 16 574 U1 beschrieben. Diese Insassenschutzeinrichtung weist Seitenairbags auf, die in der Dachhimmelverkleidung integriert sind. Die Seitenairbags sind an einen Gasgenerator angeschlossen, der im Heckbereich des Fahrzeugs untergebracht ist.

Aus der deutschen Offenlegungsschrift 199 37 678 ist eine Lastwageninsassen-Rückhaltevorrichtung beschrieben. Bei dieser Vorrichtung befindet sich ein Aufnahmebehälter für einen Gassack (Airbag) zwischen dem Fahrersitz und der Rückwand bzw. dem Heckfenster des Lastkraftwagens. Im Falle eines Unfalls entfaltet sich der Gassack zwischen dem Fahrersitz und der Rückwand, wodurch ein Aufschlagen des Kopfes des Fahrzeuginsassen an der Rückwand bzw. an dem Heckfenster des Lastkraftwagens vermieden wird.

In der US-Offenlegungsschrift US 2002/0024203 A1 ist eine Seitenschutzeinrichtung beschrieben, bei der Gasaustrittslöcher einer Gaslanze in unterschiedliche Richtungen ausgerichtet sind, und zwar abhängig von dem jeweiligen Gassackbereich, der zu füllen ist.

In der US-Offenlegungsschrift US 2001/0052693A1 A1 ist eine Schutzeinrichtung beschrieben, bei der Gassackabschnitte zweier Seitenairbags die Seitenscheiben abdecken und ein mittlerer Airbag die Vordersitze von den hinteren Sitzen des Fahrzeugs im entfalteten Zustand trennt. Außerdem verschließt ein Dachairbag die Dachöffnung eines Schiebedachs.

Airbags im Heckbereich, die sich zwischen der Heckscheibe des Fahrzeugs und dem Kopf des Fahrzeuginsassen entfalten, sind außerdem in der US-Patentschrift 2,834,606 beschrieben.

Der Erfindung liegt die Aufgabe zugrunde, eine Insassenschutzeinrichtung anzugeben, die einem im Fonds eines Fahrzeugs befindlichen Fahrzeuginsassen Schutz im Falle eines Unfalls bietet.

Diese Aufgabe wird ausgehend von einer Insassenschutzeinrichtung der eingangs angegebenen Art erfindungsgemäß durch die kennzeichnenden Merkmale des Anspruchs 1 gelöst. Vorteilhafte Ausgestaltungen der erfindungsgemäßen Insassenschutzeinrichtung sind in Unteransprüchen beschrieben.

Für ein gleichmäßiges und schnelles Befüllen des Gassacks ist der Gassack erfindungsgemäß mit einem Füllrohr zum Aufblasen des Gassacks verbunden. Im Hinblick auf die Montage des Füllrohres weist das Füllrohr erfindungsgemäß einen ersten und einen zweiten Füllrohrabschnitt auf, wobei der erste Füllrohrabschnitt in einem ersten Dachabschnitt und der zweite Füllrohrabschnitt in einem zweiten Dachabschnitt liegt.

Ein wesentlicher Vorteil der erfindungsgemäßen Insassenschutzeinrichtung besteht darin, dass der Fahrzeuginsasse sehr universell geschützt ist; dies bedeutet, dass er durch die erfindungsgemäße Insassenschutzeinrichtung Schutz bei einer Vielzahl an möglichen Unfallszenarien hat. So ist der Fahrzeuginsasse aufgrund der Abdeckung von Seiten- und Heckscheibe bzw. -wand im Falle eines Seitenaufpralls, im Falle eines Fahrzeugüberschlags ("Rollover"), im Falle eines Heckaufpralls und auch im Falle eines schrägen Aufpralls sehr gut geschützt.

Ein weiterer wesentlicher Vorteil der erfindungsgemäßen Insassenschutzeinrichtung ist in der Befestigung des Gassacks im Dachbereich zu sehen. Zum einen kann der Gassack im Dachbereich mittels einer geeigneten Verkleidung sehr einfach "versteckt" werden, wodurch ein optischer Einfluss auf den Innenraum weitgehend vermieden wird. Zum anderen ist eine Montage der kompletten Insassenschutzeinrichtung bereits am "Rohbau" des Fahrzeugs möglich.

Insbesondere im Bereich der hinteren Säule des Fahrzeugs ist ausreichend Platz für einen Gasgenerator zum Aufblasen des Gassacks. Es wird daher als vorteilhaft angesehen, wenn an das Füllrohr ein Gasgenerator angeschlossen ist, der im Bereich der hinteren Säule des Fahrzeugs befestigt ist. Stattdessen kann der Gasgenerator selbstverständlich auch im ersten oder zweiten Dachabschnitt befestigt sein; es ist dann lediglich im Hinblick auf optische Erwägungen eine Verkleidung oder dergleichen (z.B. auch Dachhimmel) zur Abdeckung empfehlenswert.

Im Rahmen einer vorteilhaften Fortbildung der erfindungsgemäßen Insassenschutzeinrichtung ist vorgesehen, dass der Gassack derart im Dach integriert ist, dass er von einem Dachhimmel und/oder von der Dachverkleidung verdeckt ist. Durch diese Maßnahme lässt sich das Vorhandensein der Insassenschutzeinrichtung im Fahrzeug quasi vollständig verbergen.

Um eine Abdeckung von Seitenwand/Seitenscheibe - nachfolgend wird der Einfachheit halber der Begriff "Seitenscheibe" stellvertretend für Seitenwand und/oder Seitenscheibe und der Begriff "Heckscheibe" stellvertretend für Heckscheibe und/oder Heckwand verwendet - und Heckscheibe zu erreichen, wird es als vorteilhaft angesehen, wenn der Gassack im aufgeblasenen Zustand zwei in einem senkrechten Winkel zueinander angeordnete Gassackbereiche aufweist, von denen ein erster die Seitenscheibe des Fahrzeugs und ein zweiter die Heckscheibe des Fahrzeugs jeweils zumindest teilweise abdeckt. Ein Vorteil dieser Ausgestaltung ist darin zu sehen, dass sich der Gassack aufgrund seiner Formgestaltung sehr eng an die Seitenscheibe und die Heckscheibe "anschmiegen" kann, so dass eine gezielte Positionierung des Gassacks vor der Seiten- und der Heckscheibe möglich ist.

Um die Positionierung des Gassacks vor der Heck- und der Seitenscheibe zu gewährleisten, wird es als vorteilhaft angesehen, wenn der erste Gassackbereich in einem ersten Dachabschnitt des Fahrzeugsdachs und der zweite Gassackbereich in einem zweiten Dachabschnitt des Fahrzeugsdachs integriert ist, wobei der erste Dachabschnitt entlang des seitlichen Dachrahmens bis zur hinteren Säule des Fahrzeugs verläuft und sich der zweite Dachabschnitt von der hinteren Säule entlang eines hinteren Querträgers erstreckt. Aufgrund der Anordnung des für die Seitenscheibe vorgesehenen ersten Gassackbereichs "über" der Seitenscheibe und der Anordnung des für die Heckscheibe vorgesehenen zweiten Gassackbereichs "über" der Heckscheibe wird eine sehr genaue Positionierung des sich entfaltenden Gassacks vor der Heck- und der Seitenscheibe erreicht.

Zum Schutz des Gassacks der Insassenschutzeinrichtung wird es als vorteilhaft angesehen, wenn der Gassack in einem Aufnahmebehälter aufbewahrt ist.

Zur einfachen Montage des Aufnahmebehälters im Dach wird es als vorteilhaft angesehen, wenn der Aufnahmebehälter einen ersten Teilbehälter aufweist, der im ersten Dachabschnitt liegt, und der Aufnahmebehälter einen mit dem ersten Teilbehälter im Bereich der hinteren Säule verbundenen zweiten Teilbehälter aufweist, der im zweiten Dachabschnitt liegt. Der erste Gassackbereich ist dann vorteilhaft im ersten Teilbehälter des Aufnahmebehälters und der zweite Gassackbereich im zweiten Teilbehälter des Aufnahmebehälters aufbewahrt.

Um ein Entfalten des Gassacks möglichst dicht an der Heck- und der Seitenscheibe sicherzustellen, wird es als vorteilhaft angesehen, wenn der Gassack so geformt ist, dass sich sein zweiter Gassackbereich zwischen einer Kopfstütze des Insassensitzes und der Heckscheibe bzw. Heckwand beim Aufblasen entfaltet.

Zum Befüllen des Gassacks mit Gas sind Kaltgas- oder Hybridgasgeneratoren besonders empfehlenswert.

Zur Erläuterung der Erfindung zeigt eine Figur ein Ausführungsbeispiel für eine erfindungsgemäße Insassenschutzeinrichtung.

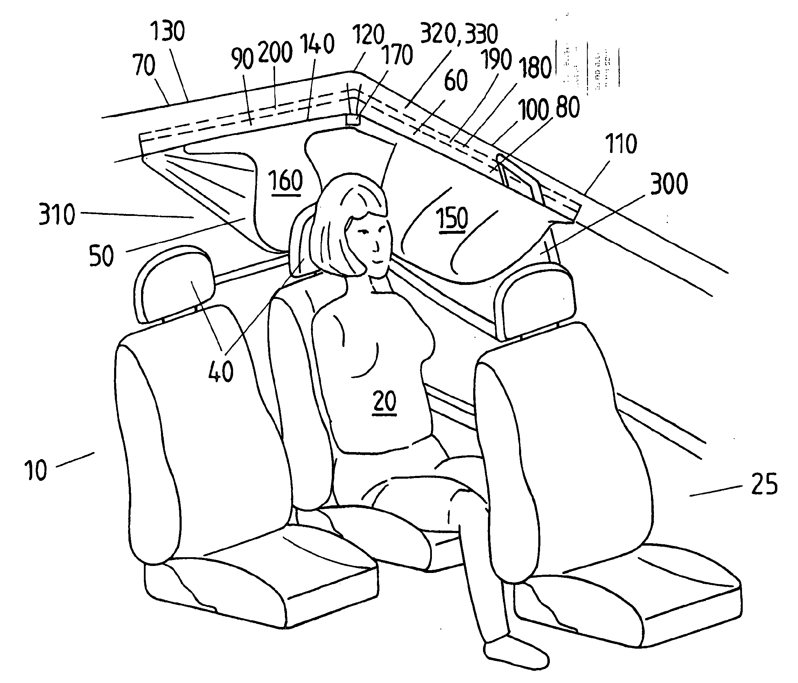

Man erkennt in der Figur eine Insassenschutzeinrichtung 10 zum Schutz eines Fahrzeuginsassen 20 im Falle eines Unfalls. Der Fahrzeuginsasse 20 befindet sich in der Darstellung gemäß der Figur im Fonds des Fahrzeugs 25 auf einem Insassensitz 30. Der Insassensitz 30 ist mit einer Kopfstütze 40 ausgestattet.

Im Falle eines Fahrzeugunfalls wird - wie in der Figur dargestellt - ein Gassack 50 der Insassenschutzeinrichtung 10 aufgeblasen. Der Gassack 50 ist - im nicht aufgeblasenen Zustand - in einem Aufnahmebehälter 60 untergebracht, der im Dachbereich 70 des Fahrzeugs 25 befestigt ist. Der Aufnahmebehälter 60 besteht aus zwei Teilbehältem 80 und 90, die senkrecht aufeinander stehen.

Der erste Teilbehälter 80 befindet sich dabei in einem ersten Dachabschnitt 100 des Dachbereichs 70; dieser erste Dachabschnitt 100 verläuft entlang des seitlichen Dachrahmens 110 bis zur hinteren Säule 120 des Fahrzeugs 25. An den ersten Dachabschnitt 100 schließt sich ein zweiter Dachabschnitt 130 an, der sich von der hinteren Säule 120 entlang eines hinteren Querträgers 140 erstreckt. In diesem zweiten Dachabschnitt 130 ist der erste Teilbehälter 90 angeordnet.

Der Gassack 100 weist im aufgeblasenen Zustand zwei Gassackbereiche (Kissenbereiche) 150 und 160 auf. Die beiden Gassackbereiche 150 und 160 stehen in einem Winkel zueinander, der ca. 90° beträgt. Der erste Gassackbereich 150 ist dabei im ersten Dachabschnitt 100 angeordnet und befindet sich - im nicht aufgeblasenen Zustand - im ersten Teilbehälter 80 des Aufnahmebehälters 60. Der zweite Gassackbereich 160 ist im zweiten Dachabschnitt 130 angeordnet und befindet sich - unaufgeblasen - im zweiten Teilbehälter 90 des Aufnahmebehälters 70.

In der hinteren Säule 120 ist ein Gasgenerator 170 untergebracht, an den ein Füllrohr 180 angeschlossen ist. Das Füllrohr 180 steht mit dem Gassack 50 in Verbindung und bläst diesen auf, wenn der Gasgenerator 170 aktiv ist. Das Füllrohr 180 ist - ebenso wie der Aufnahmebehälter 60 und der Gassack 50 - in zwei Teilabschnitte unterteilt; ein erster Füllrohrabschnitt 190 befindet sich im ersten Dachabschnitt - beispielsweise im oder am ersten Teilbehälter 80 - und der zweite Füllrohrabschnitt 200 befindet sich im zweiten Dachabschnitt 130 - beispielsweise im oder am zweiten Teilbehälter 90. Die beiden Füllrohrabschnitte 190 und 200 stehen somit ebenfalls senkrecht aufeinander.

Die Insassenschutzeinrichtung 10 wird wie folgt betrieben: Kommt es zu einem Fahrzeugunfall, so wird in bekannter Weise der Gasgenerator 170 aktiviert. Der Gasgenerator 170 bläst daraufhin Gas in das Füllrohr 180 und damit in den Gassack 50. Der Gassack 50 bläst sich auf und deckt dann mit seinem ersten Gassackbereich 150 die Seitenscheibe 300 bzw. die Seitenwand des Fahrzeugs 25 ab.

Mit seinem zweiten Gassackbereich 160 deckt der aufgeblasene Gassack 50 die Heckscheibe 310 bzw. die Heckwand des Fahrzeugs 25 ab.

Um zu vermeiden, dass der Gassack 50 bzw. der Aufnahmebehälter 60 im Ursprungszustand - also vor einem Unfall - sichtbar sind, ist der Aufnahmebehälter 60 durch eine Dachverkleidung 320, insbesondere auch durch einen Dachhimmel 330 abgedeckt.

### Bezugszeichenliste

- 10: Insassenschutzeinrichtung
- 20: Fahrzeuginsasse
- 25: Fahrzeug
- 30: lnsassensitz
- 40: Kopfstütze
- 50: Gassack
- 60: Aufnahmebehälter
- 70: Dachbereich
- 80: Erster Teilbehälter
- 90: Zweiter Teilbehälter
- 100: Erster Dachabschnitt
- 110: Dachrahmen
- 120: Hintere Säule
- 130: Zweiter Dachabschnitt
- 140: Querträger
- 150: Erster Gassackbereich
- 160: Zweiter Gassackbereich
- 170: Gasgenerator
- 180: Füllrohr
- 190: Erster Füllrohrabschnitt
- 200: Zweiter Füllrohrabschnitt
- 300: Seitenscheibe
- 310: Heckscheibe
- 320: Dachverkleidung
- 330: Dachhimmel

## Patentansprüche

1. lnsassenschutzeinrichtung (10) mit einem aufblasbaren Gassack (50) zum Schutz eines im Fonds eines Fahrzeugs (25) befindlichen Fahrzeuginsassen (20), wobei der Gassack (50) derart ausgestaltet und derart im Dachbereich (70) des Fahrzeugs (25) befestigt ist, dass er im aufgeblasenen Zustand sowohl die Seitenwand und/oder die Seitenscheibe (300) des Fahrzeugs (25) als auch die Heckscheibe (310) und/oder die Heckwand des Fahrzeugs (25) jeweils zumindest teilweise abdeckt,
**dadurch gekennzeichnet, dass**
der Gassack (50) mit einem Füllrohr (180) zum Aufblasen des Gassacks (50) verbunden ist,
- wobei das Füllrohr (180) einen ersten und einen zweiten Füllrohrabschnitt (190, 200) aufweist,
- wobei der erste Füllrohrabschnitt (190) im ersten Dachabschnitt (100) und der zweite Füllrohrabschnitt (200) im zweiten Dachabschnitt (130) liegt und
- wobei der erste Dachabschnitt (100) entlang des seitlichen Dachrahmens (110) bis zur hinteren Säule (120) des Fahrzeugs verläuft und sich der zweite Dachabschnitt (130) entlang eines hinteren Querträgers (140) erstreckt.

2. Insassenschutzeinrichtung nach Anspruch 1, **dadurch gekennzeichnet, dass** an das Füllrohr (180) ein Gasgenerator (170) angeschlossen ist, der im Bereich der hinteren Säule (120) des Fahrzeugs (25) befestigt ist.

3. Insassenschutzeinrichtung nach Anspruch 1 oder 2, **dadurch gekennzeichnet, dass** der Gassack (50) derart im Dachbereich (70) integriert ist, dass er vom Dachhimmel (330) und/oder von der Dachverkleidung (320) verdeckt ist.

4. Insassenschutzeinrichtung nach einem der vorangehenden Ansprüche, **dadurch gekennzeichnet, dass** der Gassack (50) im aufgeblasenen Zustand zwei in einem senkrechten Winkel zueinander angeordnete Gassackbereiche (150, 160) aufweist, von denen ein erster die Seitenwand und/oder Seitenscheibe (300) des Fahrzeugs (25) und ein zweiter die Heckscheibe (310) und/oder Heckwand des Fahrzeugs (25) jeweils zumindest teilweise abdeckt.

5. Insassenschutzeinrichtung nach Anspruch 4, **dadurch gekennzeichnet, dass** der erste Gassackbereich (150) im ersten Dachabschnitt (100) des Fahrzeugsdachs (70) und der zweite Gassackbereich (160) im zweiten Dachabschnitt (130) des Fahrzeugsdachs (70) integriert ist.

6. Insassenschutzeinrichtung nach einem der vorangehenden Ansprüche, **dadurch gekennzeichnet, dass** der Gassack (50) in einem Aufnahmebehälter (60) aufbewahrt ist, der im Dachbereich (70) des Fahrzeugs befestigt ist.

7. Insassenschutzeinrichtung nach Anspruch 6, **dadurch gekennzeichnet, dass** der Aufnahmebehälter einen ersten Teilbehälter (80) aufweist, der im ersten Dachabschnitt (100) liegt, und dass der Aufnahmebehälter (70) einen mit dem ersten Teilbehälter (80) im Bereich der hinteren Säule (120) verbundenen zweiten Teilbehälter (90) aufweist, der im zweiten Dachabschnitt (130) liegt.

8. Insassenschutzeinrichtung nach Anspruch 7, **dadurch gekennzeichnet, dass** der erste Gassackbereich (150) im ersten Teilbehälter (80) des Aufnahmebehälters (60) und der zweite Gassackbereich (160) im zweiten Teilbehälter (90) des Aufnahmebehälters (70) aufbewahrt ist.

9. Insassenschutzeinrichtung nach einem der vorangehenden Ansprüche, **dadurch gekennzeichnet, dass** der Gassack (50) so geformt ist, dass sich sein zweiter Gassackbereich (160) zwischen einer Kopfstütze (40) des Insassensitzes (30) und der Heckscheibe (310) bzw. Heckwand beim Aufblasen entfaltet.

10. Insassenschutzeinrichtung nach einem der vorangehenden Ansprüche, **dadurch gekennzeichnet, dass** ein Kaltgasgenerator oder ein Hybridgasgenerator als Gasgenerator (170) mit dem Gassack (50) in Verbindung steht.

## Claims

1. Occupant protection device (10) having an inflatable airbag (50) for protecting a vehicle occupant (20) in the rear compartment of a vehicle (25), wherein the airbag (50) is designed in such a manner and fastened in the roof region (70) of the vehicle (25) in such a manner that, when inflated, it in each case at least partially covers both the side wall and/or the side window (300) of the vehicle (25) and also the rear window (310) and/or the rear wall of the vehicle (25), **characterized in that** the airbag (50) is connected to a filling tube (180) for inflating the airbag (50),
- the filling tube (180) having a first and a second filling tube section (190, 200),
- the first filling tube section (190) being situated in the first roof section (100) and the second filling tube section (200) being situated in the second roof section (130) and
- the first roof section (100) running along the lateral roof frame (110) as far as the rear pillar (120) of the vehicle and the second roof section (130) extending along a rear cross member (140).

2. Occupant protection device according to Claim 1,
**characterized in that** a gas generator (170) which is fixed in the region of the rear pillar (120) of the vehicle (25) is connected to the filling tube (180).

3. Occupant protection device according to Claim 1 or 2, **characterized in that** the airbag (50) is integrated in the roof region (70) in such a manner that it is concealed by the rooflining (330) and/or by the roof covering (320).

4. Occupant protection device according to one of the preceding claims, **characterized in that** the airbag (50), when inflated, has two airbag regions (150, 160) which are arranged at a right angle to each other and of which a first region in each case at least partially covers the side wall and/or side window (300) of the vehicle (25) and a second region in each case at least partially covers the rear window (310) and/or rear wall of the vehicle (25).

5. Occupant protection device according to Claim 4, **characterized in that** the first airbag region (150) is integrated in the first roof section (100) of the vehicle roof (70) and the second airbag region (160) is integrated in the second roof section (130) of the vehicle roof (70).

6. Occupant protection device according to one of the preceding claims, **characterized in that** the airbag (50) is stored in a holding container (60) which is fastened in the roof region (70) of the vehicle.

7. Occupant protection device according to Claim 6, **characterized in that** the holding container has a first sub-container (80) which is situated in the first roof section (100), and **in that** the holding container (70) has a second sub-container (90) which is connected to the first sub-container (80) in the region of the rear pillar (120) and is situated in the second roof section (130).

8. Occupant protection device according to Claim 7,
**characterized in that** the first airbag region (150) is stored in the first sub-container (80) of the holding container (60) and the second airbag region (160) is stored in the second sub-container (90) of the holding container (70).

9. Occupant protection device according to one of the preceding claims, **characterized in that** the airbag (50) is shaped in such a manner that its second airbag region (160) unfolds as it inflates between a head restraint (140) of the occupant's seat (30) and the rear window (310) or rear wall.

10. Occupant protection device according to one of the preceding claims, **characterized in that** a cold gas generator or a hybrid gas generator is connected as the gas generator (170) to the airbag (50).

## Revendications

1. Dispositif de protection de passager (10), comportant un coussin à gaz (50) gonflable pour protéger un passager (20) de véhicule se trouvant à l'arrière d'un véhicule (25), le coussin à gaz (50) étant réalisé et fixé dans la région de toit (70) du véhicule (25) de telle sorte qu'à l'état gonflé, il recouvre au moins partiellement tant la paroi latérale et/ou la vitre latérale (300) du véhicule (25) que la fenêtre arrière (310) et/ou la paroi arrière du véhicule (25), respectivement,
**caractérisé en ce que**
le coussin à gaz (50) est relié à un tube de remplissage (180) pour gonfler le coussin à gaz (50),
- le tube de remplissage (180) présentant un premier et un deuxième tronçon de tube de remplissage (190, 200),
- le premier tronçon de tube de remplissage (190) se trouvant dans le premier tronçon de toit (100), et le deuxième tronçon de tube de remplissage (200) se trouvant dans le deuxième tronçon de toit (130), et
- le premier tronçon de toit (100) s'étendant le long du cadre de toit (110) latéral jusqu'à la colonne arrière (120) du véhicule et le deuxième tronçon de toit (130) s'étendant le long d'un longeron transversal arrière (140).

2. Dispositif de protection de passager selon la revendication 1, **caractérisé en ce qu'**au tube de remplissage (180) est raccordé un générateur de gaz (170) qui est fixé dans la zone de la colonne arrière (120) du véhicule (25).

3. Dispositif de protection de passager selon l'une des revendications 1 ou 2, **caractérisé en ce que** le coussin à gaz (50) est intégré dans la zone de toit (70) de telle sorte qu'il est recouvert par le ciel de toit (330) et/ou par l'habillage de toit (320).

4. Dispositif de protection de passager selon l'une des revendications précédentes, **caractérisé en ce que** le coussin à gaz (50) à l'état gonflé présente deux régions de coussin à gaz (150, 160) agencées en angle droit l'une par rapport à l'autre, dont une première recouvre au moins partiellement la paroi latérale et/ou la vitre latérale (300) du véhicule (25) et la deuxième recouvre la fenêtre arrière (310) et/ou la paroi arrière du véhicule (25), respectivement.

5. Dispositif de protection de passager selon la revendication 4, **caractérisé en ce que** la première région de coussin à gaz (150) est intégrée dans le premier tronçon de toit (100) du toit de véhicule (70) et la deuxième région de coussin à gaz (160) est intégrée dans le deuxième tronçon de toit (130) du toit de véhicule (70).

6. Dispositif de protection de passager selon l'une des revendications précédentes, **caractérisé en ce que** le coussin à gaz (50) est maintenu dans un récipient (60) qui est fixé dans la zone de toit (70) du véhicule.

7. Dispositif de protection de passager selon la revendication 6, **caractérisé en ce que** le récipient présente un premier récipient partiel (80) qui se trouve dans le premier tronçon de toit (100), et **en ce que** le récipient (60) présente un deuxième récipient partiel (90) qui se trouve dans le deuxième tronçon de toit (130) et qui est relié au premier récipient partiel (80) dans la zone de la colonne arrière (120).

8. Dispositif de protection de passager selon la revendication 7, **caractérisé en ce que** la première région de coussin à gaz (150) est maintenue dans le premier récipient partiel (80) du récipient (60), et la deuxième région de coussin à gaz (160) est maintenue dans le deuxième récipient partiel (90) du récipient (60).

9. Dispositif de protection de passager selon l'une des revendications précédentes, **caractérisé en ce que** le coussin à gaz (50) est formé de telle sorte que sa deuxième région de coussin à gaz (160) se déploie entre un appui-tête (40) du siège de passager (30) et la fenêtre arrière (310) ou la paroi arrière lors du gonflage.

10. Dispositif de protection de passager selon l'une des revendications précédentes, **caractérisé en ce qu'**un générateur de gaz froid ou un générateur de gaz hybride, à titre de générateur de gaz (170), est en communication avec le coussin à gaz (50).
